Europäisches Patentamt

European Patent Office

Office européen des brevets

(11) Publication number: **0 593 904 A1**

# EUROPEAN PATENT APPLICATION

(21) Application number: **93114886.0**

(22) Date of filing: **16.09.93**

(51) Int. Cl.5: **B01D 53/36**

(30) Priority: **20.10.92 US 963371**

(43) Date of publication of application:
**27.04.94 Bulletin 94/17**

(84) Designated Contracting States:
**AT BE DE ES FR GB IT NL SE**

(71) Applicant: **CORNING INCORPORATED**
**Houghton Park**
**Corning New York 14831(US)**

(72) Inventor: **Hertl, William, Corning Incorporated**
**Patent Department,**
**SP FR 02-12**
**Corning, NY 14831(US)**
Inventor: **Lachman, Irwin Morris, Corning**
**Incorporated**
**Patent Department,**
**SP FR 02-12**
**Corning, NY 14831(US)**

(74) Representative: **Reinhard, Skuhra, Weise**
**Postfach 44 01 51**
**D-80750 München (DE)**

(54) **Improvement in exhaust gas conversion system using zeolite positioned close to exhaust gas source.**

(57) An improvement in a system and method is disclosed for converting exhaust gas from an exhaust gas generating device, to innocuous products in which exhaust gas is contacted with a catalyst system comprising a $NO_x$, CO, and hydrocarbon conversion catalyst. The improvement comprises providing a zeolite upstream of the conversion catalyst and positioned close enough to the device to allow the temperature of the zeolite to reach at least about 100°C within a period of time of no longer than about 100 seconds after start-up of the device, and contacting the exhaust gas with the zeolite to cause adsorption of hydrocarbons during that period. The zeolite has a $SiO_2$ to $Al2O_3$ mole ratio of no greater than about 250 to 1, and pore openings of about 3.8 to about 6.0Å in diameter.

Fig. 1

Rank Xerox (UK) Business Services
(3.10/3.09/3.3.4)

This invention relates to an improvement in an exhaust gas conversion system in which a zeolite is positioned in close proximity to the exhaust gas source. The zeolite is selected based on its ability to rapidly adsorb hydrocarbons, especially low molecular weight alkenes at temperatures of at least about 100°C as compared to room temperature.

Background of the Invention

Internal combustion engines emit a large amount of unburned hydrocarbons during cold engine start-up. In fact, a substantial fraction of the total emitted hydrocarbons have been found to occur during the first minutes due to the uncombusted hydrocarbons in the rich fuel mixture.

Release of hydrocarbons after start-up of an engine poses a special problem because at this point the temperature is not high enough for conversion to innocuous products in the presence of conventional catalysts. The catalysts utilized in catalytic converter systems are generally ineffective at ambient temperature and must reach high temperatures, often in the range of 300-400°C before they are activated.

Low molecular weight alkenes (olefins) are very troublesome because they have a great propensity to form ozone in the atmosphere and are most difficult to trap by adsorption. Ozone is a major smog forming constituent. For this reason, emission standards are becoming more stringent with regard to ozone-forming hydrocarbons.

A major concern in using zeolites for adsorbing hydrocarbons has been the inhibiting or poisoning effect of water vapor on hydrocarbon adsorption. The inhibiting effect is more pronounced for low molecular weight hydrocarbons, especially alkenes. Water vapor is present in automotive exhaust gas due to hydrocarbon combustion.

One approach to reducing cold start emissions is to temporarily adsorb hydrocarbons on zeolites. These methods involve using the zeolite adsorber in the exhaust stream in a "by-pass" mode. That is, the zeolite adsorber is exposed to the cold start exhaust, but before it reaches its desorption temperature (about 150°C). Once the main catalyst reaches its light-off temperature (about 300-400°C), a system of valves sends the exhaust directly to the main converter, by-passing the adsorber.

U.S. patents 4,985,210 and 5,125,231 relate to exhaust gas purifying systems utilizing a three-way or main converter and a hydrocarbon adsorber in a by-pass mode.

At the present state of the art, adsorption of low molecular weight alkenes is still a problem.

It would be advantageous to have an exhaust gas conversion system in which hydrocarbons, especially low molecular weight alkenes can be adsorbed without the inhibiting effects of water.

Summary of the Invention

In accordance with one aspect of the invention, there is provided an improvement in a system for converting exhaust gases from an exhaust gas generating device, to innocuous products, which system comprises a main catalyst for converting $NO_x$, CO, and hydrocarbons to innocuous products. The improvement comprises having a zeolite positioned upstream of the main catalyst and close enough to the device to allow the temperature of the zeolite to reach at least about 100°C within a period of time of no longer than about 100 seconds after start-up of the device, to cause adsorption of hydrocarbons during that period. The zeolite has a $SiO_2$ to $Al2O_3$ mole ratio of no greater than about 250 to 1, and pore openings of about 3.8 to about 6.0Å in diameter.

In accordance with another aspect of the invention, there is provided an improvement in a method for converting exhaust gas from an exhaust gas generating device, to innocuous products, which method comprises contacting the exhaust gases with a catalyst system comprising a main catalyst for converting $NO_x$, CO, and hydrocarbons to innocuous products. The improvement comprises, contacting the exhaust gas with the zeolite described above, before contact with the main catalyst.

Brief Description of the Figures

Figure 1 is a schematic diagram showing the zeolite of the present invention connected with a main catalyst body.

Figure 2 is a schematic diagram showing the zeolite of the present invention connected with a main catalyst body and an additional hydrocarbon adsorbing system connected in a by-pass mode with the main catalyst.

Figure 3 is a plot of adsorption of propylene versus time of exposure to propylene-containing gas stream, and the temperature rise of the gas stream.

Figure 4 is a plot of adsorption of propylene with temperature from propylene-containing gas streams containing no water, and about 2.5 vol.% water.

Detailed Description of the Invention

The present invention provides an improvement in a method and system of converting exhaust gas from an exhaust gas generating device, to innocuous products. The exhaust gas is generated as a result of hydrocarbon combustion. The typical exhaust gas generating device is an internal combustion engine and the invention is especially suited to automotive exhaust conversion. The improvement is the use of a hydrocarbon adsorbing zeolite placed close enough to the exhaust gas generating device so that the temperature of the zeolite reaches at least about 100°C during a very short period of time after start-up of the device. This period of time is usually no longer than about 100 seconds after start-up of the device, more advantageously, no longer than about 60 seconds, and most advantageously, no longer than about 10 seconds. One of the advantages afforded by the improvement of the present invention is that at the above named temperature, water vapor does not inhibit the adsorption of hydrocarbons, especially low molecular weight alkenes as happens at lower temperatures, especially room temperature. At the above temperature, the type of adsorption is predominately chemisorption. Chemisorption is adsorption by chemical forces as opposed to physical forces. Substances which are chemisorbed, are held much more strongly and longer than substances which are physically adsorbed. In the present invention, it is advantageous to chemisorb the hydrocarbons because they must be held on the zeolite until the main catalyst reaches operating temperature, which is about 200-300°C. In physical adsorption, the hydrocarbons would prematurely desorb from the zeolite and not be converted to $CO_2$ and water by the main catalyst, and would therefore be discharged to the atmosphere. The improvement afforded by the present invention is especially advantageous for adsorption of low molecular weight hydrocarbons, especially alkenes, since they adsorb in greater quantity by chemisorption as opposed to physical adsorption.

Examples of hydrocarbons which are adsorbed according to the improvement of the present invention, although it is to be understood that the invention is not limited to these, are low molecular weight or light hydrocarbons found in gasoline, diesel fuel, alcohols, and their products of combustion and molecular rearrangements. Alkanes and alkenes with 1 to 6 carbon atoms are considered to be low molecular weight hydrocarbons. The invention is especially suited for low molecular weight alkenes (olefins). Some examples are ethylene, propylene, butadiene, pentene, and other unsaturated hydrocarbons. The invention is especially suited for removal of hydrocarbons having a Maximum Incremental Reactivity (MIR) of greater than about 1.0. The MIR is a measure of the propensity of a given hydrocarbon to form ozone expressed as grams ozone/gram of organic gas. The MIR is used in calculating the potential amount of ozone formed per mile for a specific hydrocarbon. In general, alkanes or paraffins have low MIR values (<0.5), aromatic compounds vary from <1 to about 10, and light alkenes or olefins especially ethylene, propylene and butadiene have very high MIR values of about 7.2 to about 10.8. Description of MIR values and a list of the MIR values assigned to various hydrocarbons is given in Technical Support Document entitled "Proposed Reactivity Adjustment Factors for Transitional Low-Emission Vehicles", September 27, 1991, Mobile Source Division, Research Division, California Air Resources Board, Part B, and Appendix A-1.

The zeolites that are suited to the practice of the present invention are those having $SiO_2$ to $Al_2O_3$ mole ratios of no greater than about 250 to 1. These ratios allow for sufficient acid sites, determined by Al content, to allow sufficient hydrocarbons, especially alkenes, to chemisorb. The zeolites have pore openings of about 3.8 to about 6.0Å diameter. The pore openings are advantageous for adsorbing the low molecular weight hydrocarbons. Some preferred zeolites are pentasil type, beta, gmelinite, mazzite, offretite, ferrierite, heulandite, chabazite, erionite, phillipsite, clinoptilolite, type A, and combinations thereof. More preferred are ZSM-5, beta, and combinations thereof. The most preferred is ZSM-5 zeolite because it has a high degree of hydrophobicity.

The zeolite can be in powder form, pellets, beads, etc. In these forms, it is in a container having an inlet and outlet end through which the exhaust gas passes to come in contact with the zeolite.

The zeolite can be in a self supporting shape having its inlet and outlet ends connected by conduits to the exhaust gas and to the main catalyst system respectively. One preferred self supporting form is a honeycomb which is made typically by extrusion. The exhaust gas passes through the cells of the honeycomb from inlet to outlet end.

The zeolite can be in contact with a substrate which has inlet and outlet ends connected to the exhaust gas and main catalyst respectively. The zeolite is applied to the substrate by conventional washcoating or spraying techniques to form a green coated substrate which is dried and heat treated.

The heat-treating is done at a sufficient temperature for a sufficient time to form the zeolite as a washcoat on the substrate, and to bond the particulates of the washcoat to the substrate and to each other. The heat treating conditions vary with the specific slurry components, size and configuration of the substrate, and other processing conditions. However, in general the heat treating conditions are about 400°C to about 700°C, and preferably about 500°C to about 650°° for about 3 to about 6 hours. For example, the substrate is contacted with a slurry containing the zeolite and other components such as hinders, and dispersing agents, etc, as is known in the art. Some binders are aluminum oxide, most preferred of which is the precursor boehmite, other precursors of aluminum oxide, e.g., aluminum nitrate, and silica, titania, zirconia, rare earth oxides, e.g., ceria, etc, and their precursors.

Some typical compositions are in percent by weight 0 to about 50 methylcellulose, 0 to about 50 silica, silica gel, or silica precursors, 0 to about 50 $Al_2O_3$ from boehmite, aluminum nitrate, or alumina sol, and about 50 to about 95 of the zeolite. More preferred compositions are in percent by weight 0 to about 5 methylcellulose, 0 to about 30 silica, silica gel, or silica precursors, 0 to about 30 alumina from aluminum nitrate, 0 to about 15 alumina from boehmite, and about 70 to about 90 being the zeolite.

Unavoidable impurities can also be present in the compositions of the present invention, if they do not interact with the constituents of these compositions. However, impurities that cause sintering or destruction of the zeolite structure must be kept at low levels. Most typically, impurities should be kept below about 5 wt.%, preferably below about 1% and most preferably below about 0.01%.

Some especially preferred compositions are given in the Table. In each case, the constituents or their precursors are blended with about 0.5 to about 2.0% methylcellulose (Dow A4M). In each case a slurry is formed in a suitable machine such as a ball mill, mix-muller, or double-arm mixer by admixing with a liquid medium optionally containing about 0.01 to about 1.0% by weight surface active agent such as Airco's Surfanol 485. The preferred liquid medium is water, however organic liquids in combination with water can also be used, for example, isopropyl alcohol + water. Organic liquids by themselves can also be used, e.g., toluene or xylene.

## **TABLE**

### **Weight Percent Constituents of Adsorber Compositions After Final Heat Treatment**

| Constituent | A | B | C | D | E | F | G | H | I |
|---|---|---|---|---|---|---|---|---|---|
| ZSM-5 [$SiO_2/Al_2O_3$=26/1] | – | – | – | – | – | 85 | – | 90 | – |
| ZSM-5 [$SiO_2/Al_2O_3$=150/1] | – | – | – | – | 85 | – | – | – | 90 |
| ZSM-5 [$SiO_2/Al_2O_3$=55/1] | – | – | – | 85 | – | – | – | – | – |
| ZSM-5 [$SiO_2/Al_2O_3$=280/1] | 75 | – | 85 | – | – | – | – | – | – |
| Beta Zeolite [$SiO_2/Al_2O_3$=20/1] | – | 75 | – | – | – | – | 85 | – | – |
| Gamma Alumina [from Dispersal Boehmite, | | | | | | | | | |

| | | | | | | | | | |
|---|---|---|---|---|---|---|---|---|---|
| Condea Chemie] | 25 | – | – | 15 | – | – | 15 | – | 10 |
| Alumina [from Nyacol AL colloidal alumina sol] | – | – | 15 | – | – | 15 | – | – | – |
| Gamma alumina from Reagent Aluminum nitrate] | – | – | – | – | 15 | – | – | – | – |
| Silica [from [DUPONT Ludox HS-40] | – | 25 | – | – | – | – | – | 10 | – |

It is to be understood that the invention is not limited to the nature of substrate materials. However, the substrate is most desirably made of any material that is suitable for high temperature applications. Some preferred materials are those that include as a predominant phase: ceramic, glass-ceramic, glass, high surface area-high temperature stable oxides, metal, and combinations thereof. By combinations is meant physical or chemical combinations, eg., mixtures or composites. Some substrate materials that are especially suited to the practice of the present invention, although it is to be understood that the invention is not limited to these, are those made of cordierite, mullite, clay, talc, zircon, zirconia, spinel, alumina, silica, lithium aluminosilicates, alumina silica, feldspar, titania, fused silica, nitrides, carbides, borides, eg., silicon carbide, silicon nitride or mixtures of these. Some typical ceramic substrates are disclosed in U.S. Patents 4,127,691 and 3,885,977. Those patents are herein incorporated by reference as filed. Some preferred metal substrates are stainless steels and iron group metal based bodies, (Fe, Co, Ni) such as, for example, Fe and Cr and/or Al bodies with optional additions of various metals and/or oxides for various properties and applications. Some typical metal or metal alloy bodies are disclosed in U.S. Patents 4,758,272 and 4,992,233 and U.S. application SN 767,889, filed September 30, 1991. Those patents and application are herein incorporated by reference as filed. Electrically heated porous or non-porous substrates are also suitable.

The substrates can be of any size and shape suitable to the application. Preferred substrates are honeycomb structures which are made typically by extrusion. Exhaust gas is carried through a conduit to the substrate, passes through the open ended cells of the honeycomb to come in contact with the zeolite, and exits the substrate and is carried by a conduit to the main catalyst.

Some examples of honeycombs produced by the process of the present invention, although it is to be understood that the invention is not limited to these, are those having about 94 cells/cm$^2$ (about 600 cells/in$^2$), about 62 cells/cm$^2$ (about 400 cells/in$^2$), or about 47 cells/cm$^2$ (about 300 cells/in$^2$), those having about 31 cells/cm$^2$ (about 200 cells/in$^2$), or those having about 15 cells/cm$^2$ (about 100 cells/in$^2$). These bodies are made preferably of, but not limited, to materials which when fired form cordierite. Typical wall thicknesses in catalytic converter applications, for example, are about 0.15 mm, (about 0.006"), for 400 cells/in$^2$ (62 cells/cm$^2$) honeycombs. Wall thicknesses range typically from about 0.1 to about 0.6 mm, (about 0.004" to about 0.025"). The external size and shape of the body is controlled by the application, e.g. engine size and space available for mounting, etc.

The substrate can have any degree of porosity from low to high. For example, typically the wall porosity ranges from about 0% by volume to higher values which are determined by practical limits depending on the composition of the substrate and the intended application. For example, in metal monoliths, the open porosity is typically about 1 to about 2% by volume, although it can be as high as about 40%. For ceramic monoliths, the open porosity is typically about 25% to about 50% by volume.

According to the improvement of the present invention, a zeolite in any convenient form is "close-coupled" to the exhaust gas generating device. This means that the exhaust gas flows only a short distance to the zeolite. Therefore the temperature drop of the exhaust gas is so low that the zeolite is heated to at least about 100°C during the initial 100 seconds of the device operation, and preferably during the initial 60 seconds, and most preferably during the initial 10 seconds. Actual positioning and distancing of the zeolite from the device will depend on the nature and geometry of the particular system, and the invention is not meant to be limited to specific distances. For example, in conventional auto exhaust systems, the zeolite would be positioned typically about 12 cm to about 102 cm (about 5" to about 40") from the engine, and most typically about 12 cm to about 25 cm (about 5" to about 10"). The exhaust gas then flows from the zeolite directly to the main catalyst system to contact the first or most upstream unit of the catalyst system. The main catalyst system can have any convenient arrangement. Some typical main catalysts and main catalyst system arrangements are described below, although it is to be understood that the invention is not limited to such.

The exhaust gas conversion system, or main body catalyst system comprises a main catalyst for converting $NO_x$, CO, and hydrocarbons to innocuous products. By innocuous products is meant those that are generally considered to be harmless to health and the environment such as, $CO_2$, $N_2$, $H_2$, and water. There are numerous compositions of main body catalysts known in the art and the invention is not limited to any specific main body catalyst. However, some typical main body catalysts are for example, noble metal as eg, Pt, Pd, Rh, or combinations thereof on a support which is typically a porous oxide media, eg., alumina. Other constituents such as binders and promotors can be present, eg., ceria, lanthana, zirconia, yttria, or combinations thereof. It is especially preferred to use a three-way catalyst. Some typical three-way catalysts which are especially suited to the practice of the present invention for auto exhaust conversion are Pt on ceria-alumina combined with Rh on zirconia. The Pt-ceria-alumina and the Rh-zirconia can be combined and applied at once, as in a single coating or they can be applied in separate coatings. Another suitable catalyst is Pt/Pd/Rh on gamma alumina with a rare earth oxide such as ceria.

Generally, the noble metal and support are in contact with a substrate, of the types as described previously. The noble metal, support, and substrate make up the main catalyst body or catalytic converter.

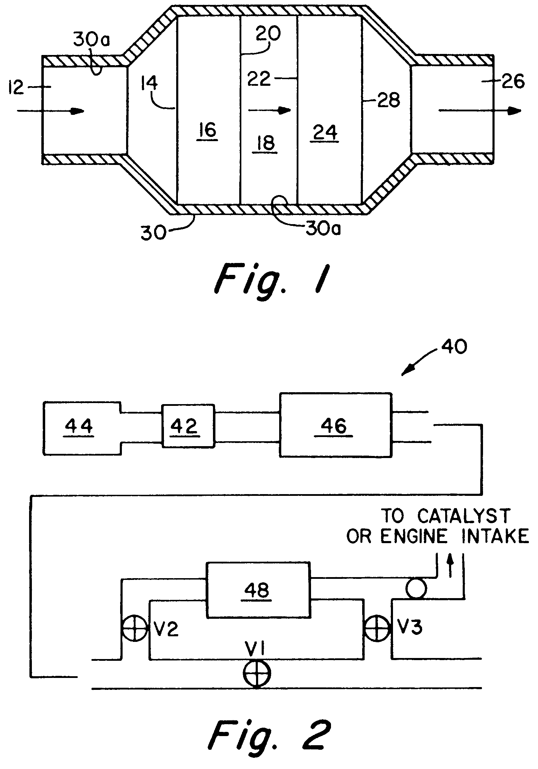

In accordance with one embodiment, the zeolite of the present invention is close coupled to an engine and connected at its outlet end to a main catalyst as shown in Figure 1. The system (10) is made of a first conduit (12) which is connected to the inlet end (14) of the zeolite adsorption unit (16) which is preferably a zeolite in contact with a honeycomb substrate, such as a ceramic, preferably cordierite substrate, or a zeolite in the form of a honeycomb. An exhaust gas mixture such as auto exhaust, is conveyed in its entirety through the first conduit to the inlet end of the zeolite unit, into the zeolite unit to undergo hydrocarbon adsorption. A second conduit (18) is connected at one end to the outlet end (20) of the zeolite unit. The other end of the second conduit is connected to the inlet end (22) of main converter (24). The main converter represents any main converter system such as those described above. The exhaust gas in modified form is conveyed through the second conduit to the second unit to undergo conversion of $NO_x$, CO, and hydrocarbons. The second conduit is connected to the outlet end of the zeolite unit and the inlet end of the main converter unit. An exit conduit (26) is shown connected to the outlet end (28) of the main catalyst unit. The main catalyst unit is typically a honeycomb substrate having the catalyst in contact therewith, such as for example, by washcoating. The converted gas mixture passes through the exit conduit to ambient atmosphere (via a muffler system). The arrows indicate the direction of flow through the apparatus.

It is to be understood that the respective conduits can be connected to the respective units by any means known in the art. It is to be understood also that respective sizes and lengths of the conduits and units can vary depending on the application and that the invention is not limited to any sizes or size relationships of conduits and catalyzed units.

Figure 1 shows the units in a conventional canister or can shown as (30) with the inner surface shown as 30a, as is used in automotive applications. The units are held fixed in the canister by conventional means such as, for example, by metal mesh, or ceramic mats, etc. Refractory fibrous material is often used to prevent passage of gases between the units and the canister. The various sections of the can serve as the respective conduits.

In accordance with another embodiment, the main catalyst system can have an additional hydrocarbon adsorber system connected in a by-pass mode with the main catalyst. Figure 2 is a schematic of another possible arrangement (40) in which the improvement of the present invention is utilized. Zeolite (42) is shown connected to the engine (44). It is close coupled, to the engine so that it very rapidly reaches at least about 100°C and adsorbs hydrocarbons, especially low molecular weight alkenes. A main catalyst, (46), is connected to zeolite (42). Downstream from the main catalyst, in a by-pass mode, are other adsorbers, (48), which remain fairly cool (at least until the main catalyst lights-off) and effectively adsorb heavier alkanes and aromatics. Also, any portion of the hydrocarbons desorbed from the "close-coupled" zeolite before light-off is then adsorbed by the additional adsorber which by that time has reached its adsorption temperature. Valves V1, V2, and V3 control the exhaust gas flow to and from the adsorber before light-off and from the main catalyst at light-off. The particular scheme is meant to be illustrative, and other schemes can be used.

For example, U.S. patent 4,985,210 describes a system in which adsorbent is located at the upstream side of the catalytic converter so that when the exhaust gas temperature is not higher than a specific temperature, a harmful component is adsorbed by means of the adsorbent, whereas when the exhaust gas temperature exceeds the specific temperature the harmful component is desorbed from the adsorbent and is introduced into the catalytic converter. In another embodiment, an activated carbon trapper and a by-pass are provided in parallel at the upstream side of the adsorbent so that the flow paths of the exhaust gas are selectively switched from one to the other in accordance with the level of the exhaust gas temperature. When the exhaust gas temperature is lower than 150°C, the exhaust gas flows to the carbon trapper and then to the main catalytic converter. When the temperature reaches 150°C, the activated carbon is bypassed and the exhaust gas passes into the adsorbent and then to the catalytic converter. That patent is herein incorporated by reference. U.S. patent 5,125,231 describes a system designed to reduce hydrocarbon emissions having first and second catalytic converters. Exhaust gas is conveyed to the first and second converters depending on the temperature. Before the main converter reaches light-off temperature, the exhaust gas is directed to the second converter for adsorption of hydrocarbons and then to the atmosphere. At higher temperatures, the adsorbed hydrocarbons desorb and are conveyed to the first converter. When the first converter has reached light-off temperature, conversion of pollutants takes place therein. A system of thermostatically controlled valves is used to convey the exhaust gas to the proper converter depending on the temperature. That patent is herein incorporated by reference. In the improvement of the present invention, the zeolite is connected at its outlet end to the upstream ends of these systems.

To more fully illustrate the invention, the following non-limiting examples are presented. All parts, portions, and percentages are on a weight basis unless otherwise stated.

Example

Preparation of zeolite adsorber Weighed quantities of ZSM-5 zeolite (silica/alumina = 26:1) and colloidal gamma alumina binder are mixed into deionized water and then roll milled for about 2 hours to obtain a uniform dispersion containing about 85% zeolite and 15% alumina on a dry weight basis. About 0.5% Surfanol 485 by Airco is used to assist dispersion and to function as a wetting agent. A cordierite honeycomb substrate (5.15g, about 400 cells/in$^2$, or about 47 cells/cm$^2$, 1" (2.54 cm) diameter, 1" (2.54 cm) length) is then dipped into the dispersion for about 1 minute, removed, and the channels blown out with a stream of air to remove excess liquid. The coated substrate is then dried at about 150°C in a circulating air oven and weighed. If insufficient coated solids are present, the dipping and drying procedure is repeated until the desired weight of coating is obtained. The substrate with the coating is then fired at about 500°C for about 3 hours, and weighed. This sample weighs about 7.34 g (about 5.06 g cordierite, about 1.94 g zeolite + 0.34 g alumina binder).

The hydrocarbon containing gas stream used in the following examples has the following composition (vol): $NO_x$ = 1000 ppm, CO = 1%, $H_2$ = 0.33%, $O_2$ = 0.77%, $CO_2$ = 14%, propylene = 500 ppm, balance $N_2$.
Space velocity = 50,000 volume changes/hr.

Example 1 (Illustrative)

To experimentally show the working of this invention, the following was done. The honeycomb with the ZSM-5 zeolite hydrocarbon adsorber (Composition F of the Table) is placed in a test furnace and exposed to the synthetic exhaust gases over the temperature range ambient to about 600°C, and then cooled. This activates the hydrocarbon adsorbing agent, because no water is present. The experiment is then repeated with about 2.5 vol. % water added to the above synthetic exhaust gas mixture.

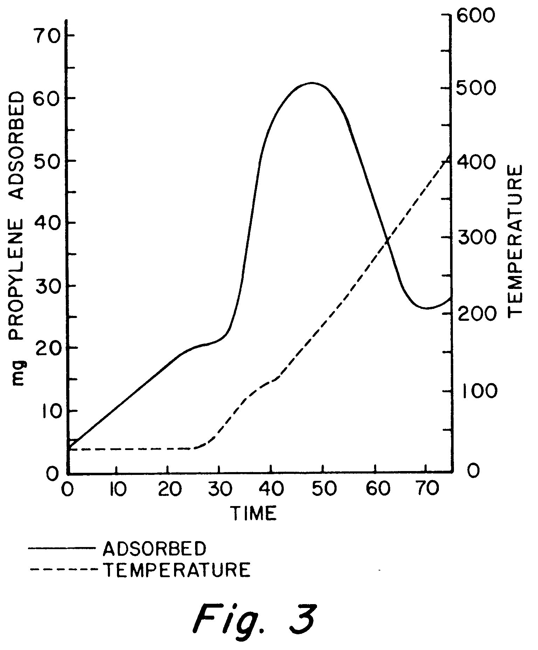

Figure 3 shows some adsorption of propylene at room temperature but a very dramatic increase in the rate of propylene adsorption as the temperature exceeds about 60°C in a simulated exhaust stream without water.

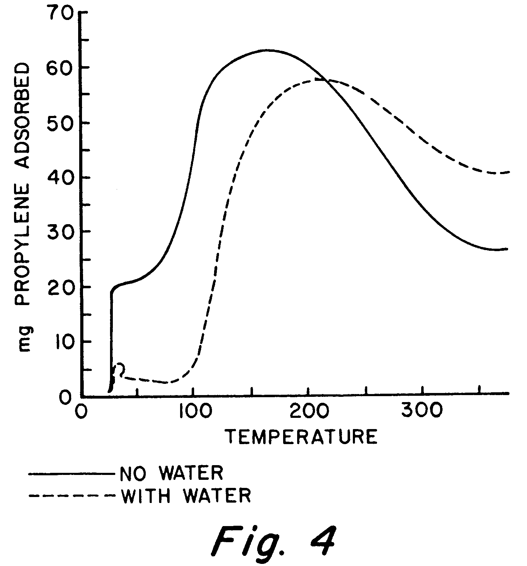

Figure 4 shows the same adsorption data as a function of temperature. Additionally another curve is shown in which there is about 2.5 vol. % water in the synthetic exhaust gas. In the latter case, there was essentially no propylene being adsorbed at room temperature and no adsorption until the temperature reached about 100°C where the rate again was dramatically high.

Figures 3 and 4 show that the zeolite can be used in a close-coupled mode according to the present invention to adsorb hydrocarbons, especially low molecular weight alkenes. Water in the exhaust gas stream does not inhibit adsorption.

It should be understood that while the present invention has been described in detail with respect to certain illustrative embodiments thereof, it should not be considered limited to such but may be used in other ways without departing from the spirit of the invention and the scope of the appended claims.

**Claims**

1. System for converting exhaust gases from an exhaust gas generating device, to innocuous products, which system comprises a main catalyst for converting $NO_x$, CO, and hydrocarbons to innocuous products,

the improvement comprising a zeolite positioned upstream of said main catalyst and close enough to said device to allow the temperature of said zeolite to reach at least about 100°C within a period of time of no longer than about 100 seconds after start-up of said device to cause adsorption of hydrocarbons during said period, said zeolite having a $SiO_2$ to $Al_2O_3$ mole ratio of no greater than about 250 to 1, and pore openings of about 3.8 to about 6.0Å in diameter.

2. System according to claim 1 wherein the hydrocarbons are low molecular weight olefins, or other low molecular weight hydrocarbons.

3. System according to claims wherein the hydrocarbons have a Maximum Incremental Reactivity of greater than about 1.0.

4. System according to claim 1 or 2 wherein said period of time is no longer than about 60 seconds.

5. System according to claim 4 wherein said period of time is no longer than about 10 seconds.

6. System according to claims 1, 2, 3, 4 or 5 wherein said zeolite is selected from the group consisting of pentasil type, beta, gmelinite, mazzite, offretite, ferrierite, heulandite, chabazite, erionite, hillipsite, clinoptilolite, A-type, and combinations thereof, or ZSM-5, beta, and combinations thereof.

7. System according to any one of claims 1-6 wherein said zeolite is in contact with a substrate.

8. System according to any one of preceding claims, wherein said substrate is a honeycomb structure.

9. System according to any one of the preceding claims, wherein said zeolite is in the form of a honeycomb structure.

10. Use of the system according to any one of the preceding claims, in a method for converting exhaust gas from an exhaust gas generating device, to innocuous products, which method comprises contacting said exhaust gas with a catalyst system comprising a main catalyst for converting $NO_x$, CO, and hydrocarbons to innocuous products, the improvement comprising,

placing the system with said zeolite close enough to said device to allow the temperature of said zeolite to reach at least about 100°C within a period of time of no longer than about 100 seconds after start-up of said device, said zeolite having a $SiO_2$ to $Al_2O_3$ mole ratio of no greater than about 250 to 1, and pore openings of about 3.8 to about 6.0Å in diameter; and

contacting said exhaust gas with said zeolite to cause adsorption of hydrocarbons during said period.

Fig. 1

TO CATALYST
OR ENGINE INTAKE

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,X | US-A-4 985 210 (TOYOTA JIDOSHA)<br>* column 3, line 34 - column 4, line 47; figure 1 *<br>--- | 1,2,6,10 | B01D53/36 |
| X | EP-A-0 485 179 (NGK INSULATORS)<br>* page 5, line 28 - line 35; figure 1A *<br>* page 5, line 49 - line 56 *<br>--- | 1,6-10 | |
| A,P | DE-A-42 36 271 (TOYOTA JIDISHA) 29 April 1993<br>* column 4, line 34 - column 6, line 22; figure 1 *<br>--- | 1,10 | |
| A | EP-A-0 424 966 (TOYOTA JIDOSHA)<br>----- | | |
| | | | TECHNICAL FIELDS SEARCHED (Int.Cl.5) |
| | | | B01D |

The present search report has been drawn up for all claims

| Place of search | Date of completion of the search | Examiner |
|---|---|---|
| THE HAGUE | 18 January 1994 | BOGAERTS, M |

EPO FORM 1503 03.82 (P04C01)